# EUROPÄISCHE PATENTSCHRIFT

(11) **EP 2 655 079 B1**
(45) Veröffentlichungstag und Bekanntmachung des Hinweises auf die Patenterteilung: **04.04.2018**
(21) Anmeldenummer: 11794694.7
(22) Anmeldetag: 06.12.2011
(51) Int. Cl.: B42C 9/00, B65C 1/04, B65H 39/055

(54) **VERFAHREN ZUM KONFEKTIONIEREN EINES STAPELS BZW. EINER KOLLEKTION AUS LOSE AUFEINANDERLIEGENDEN EIN- ODER MEHRLAGIGEN VORPRODUKTEN**
METHOD FOR ASSEMBLING A STACK OR A COLLECTION CONSISTING OF SINGLE OR MULTILAYERED PRE-PRODUCTS THAT LIE FREELY ONE ON TOP OF THE OTHER
PROCÉDÉ POUR CONFECTIONNER UNE PILE OU UN ENSEMBLE DE PRODUITS PRIMAIRES MONOCHOUCHES OU MULTICOUCHES EMPILÉS SANS ATTACHE

(30) Priorität: 20.12.2010 CH 21212010
(43) Veröffentlichungstag der Anmeldung: 30.10.2013
(73) Patentinhaber: Ferag AG, 8340 Hinwil (CH)
(72) Erfinder: HONEGGER, Werner, 8806 Bäch (CH)
(74) Vertreter: Rentsch Partner AG
(86) Internationale Anmeldenummer: PCT/EP2011/071916
(87) Internationale Veröffentlichungsnummer: WO 2012/084494

(56) Entgegenhaltungen:
- EP-A1- 0 266 454
- EP-A1- 1 516 839
- DE-T2- 69 214 614
- DE-U1- 8 701 920
- US-A- 5 096 176

## Beschreibung

### TECHNISCHES GEBIET

Die vorliegende Erfindung bezieht sich auf das Gebiet der Weiterverarbeitung von Vorprodukten (insbesondere Druckprodukten im Rahmen der Druckweiterverarbeitung). Sie betrifft ein Verfahren zum Konfektionieren eines Stapels bzw. einer Kollektion aus lose aufeinanderliegenden ein- oder mehrlagigen Vorprodukten gemäss dem Oberbegriff des Anspruchs 1.

### STAND DER TECHNIK

In der heutigen Zeit werden zunehmend als Vorprodukte vorliegende Werbemittel wie Prospekte, Flyer, Kataloge, Handzettel, Postwurfsendungen, aber auch Warenproben, CDs etc. von speziellen Dienstleistern direkt verteilt. Dabei werden häufig Werbemittel unterschiedlicher Anbieter zusammengefasst und gemeinsam verteilt, um die Verteilungskosten niedrig zu halten. Die zusammen verteilten Werbemittel beziehungsweise Vorprodukte bilden dann einen Stapel von lose aufeinanderliegenden (individuellen) Einzelexemplaren, die beispielsweise vom Verteiler jeweils am Ort der Abgabe von Hand zusammengestellt werden muss. Diese Art der Zusammenstellung ist jedoch zeitaufwändig und fehlerbehaftet, so dass in den gebildeten Stapeln entweder bestimmte Werbemittel mehrfach enthalten sind oder ganz fehlen.

Unter Stapeln werden hier grundsätzlich Zusammenstellungen von Vorprodukten verstanden, die übereinander liegen und von der Schwerkraft zusammengehalten werden. Sind die Vorprodukte in anderer räumlicher Orientierung, z.B. vertikal aneinander liegend ausgerichtet, werden sie hier auch als Kollektion bezeichnet. Die Erfindung bezieht sich auf solche verschiedenen Arten der Zusammenstellungen der Vorprodukte.

Es ist aber auch denkbar, dass die Stapel aus den Vorprodukten an einem zentralen Ort gebildet werden und dann der Verteilung zugeführt werden. In diesem Fall kann es leicht während der Verteilung zum Verrutschen der Vorprodukte innerhalb eines Stapels oder zur Vermischung von Stapeln kommen, wenn nicht besondere Vorkehrungen getroffen werden, um die einzelnen Stapel zusammenzuhalten und gegeneinander abzugrenzen.

So ist es beispielsweise möglich, den gebildeten Stapel aus den Werbemitteln beziehungsweise Vorprodukten mit einer verschweissten Folien-Umhüllung zu versehen, um den Stapel zusammenzuhalten und gegenüber anderen Stapeln abzugrenzen. Eine solche zusätzliche Verpackung der Stapel vereinfacht die Verteilung erheblich, verursacht jedoch einen relevanten zusätzlichen Aufwand und ist gegebenenfalls aus ökologischer Sicht unerwünscht. Darüber hinaus sind die verschweissten Folienbeutel vom Endverbraucher nur umständlich zu öffnen und vom Gesamteindruck her je nach Material nicht besonders ästhetisch.

Die Stapel können aber auch verschnürt oder auf andere Weise, zum Beispiel mittels eines Umschlags, gebündelt werden. So wäre es beispielsweise denkbar, den Stapel der Vorprodukte mit einem Streifband zusammenzufassen, wie es zum Beispiel aus der Druckschrift CH 461 248 bekannt ist. Hierbei ergeben sich jedoch weitgehend dieselben Nachteile, wie oben erwähnt.

Weiterhin ist es aus der Druckschrift EP 0 666 186 A1 bekannt, Vorprodukte in eine gefaltete Zeitung einzustecken, die dann als Umschlag für die eingesteckten Vorprodukte fungiert und mittels eines oder mehrerer Klebestreifen anschliessend geschlossen wird (siehe auch die WO 2007/067325 A2). Hierfür ist entweder die Bereitstellung einer Zeitung notwendig oder die Bereitstellung eines separaten Umschlags, der wiederum den Aufwand beträchtlich erhöht.

Schliesslich ist es bekannt (US 5,096,176), einzelne Teilstapel von Blättern von anderen Teilstapeln in einem grösseren Gesamtstapel dadurch zu trennen, dass nicht-klebende Papierstreifen (Spalte 1, Zeilen 58-62) als Trennstreifen um eine Kante des jeweiligen Teilstapels gelegt werden. Hiermit soll verhindert werden, dass sich die Trennstreifen, die sonst flach zwischen zwei Teilstapel gelegt werden, verschieben. Diese Art von nicht-verbindenden Trennstreifen eignet sich nur für die Trennung innerhalb des Gesamtstapels, da die Trennstreifen sofort abfallen, wenn ein Teilstapel für sich genommen transportiert oder anderweitig einzeln gehandhabt wird.

Die DE 692 14 614 T2 offenbart ein Verfahren gemäß dem Oberbegriff des Anspruchs 1 und eine Vorrichtung, die dazu dienen eine Vielzahl einzelner Papierbögen eines Informationsaufnahmemediums zeitweilig miteinander zu verbinden und insbesondere, um wirksam einen ausgewählten Satz einer Vielzahl von einem Kopierer oder Drucker ausgegebener Kopierbögen in einem einzelnen integralen Satz zu halten und miteinander zu befestigen. Solche von Kopierern oder Druckern verwendeten Papierbögen sind üblicherweise alle in Format, Flächengewicht, Material und Oberflächenbeschaffenheit identisch. Die Papierbögen werden gemäss der DE 692 14 614 T2 zu einem gestapelten Satz mit aufeinandergesetzten Kanten zusammengestellt. Ein erstes Streifensegment eines Klebebindungsbandes wird ausgegeben und um eine erste Kante des gestapelten Satzes umgeschlagen. Ein zweites Streifensegment wird um eine zweite Kante des Satzes, die der ersten Kante gegenüberliegt umgeschlagen. Die umgeschlagenen Segmente werden anschliessend klebend an gegenüberliegende Flächen des Satzes angehängt.

Die EP 1 516 839 A1 zeigt eine Vorrichtung und ein Verfahren zum Anbringen eines Ergänzungsproduktes, insbesondere eines Klebebandabschnitts, an ein Druckereiprodukt. Unter Druckereiprodukt wird dabei eine einzelne Zeitung, ein Prospekt oder eine Zeitungsbeilage oder dergleichen verstanden, an der dann ein zusätzliche Informationen enthaltendes Ergänzungsprodukt klebend angebracht wird. Das zu Beginn flache Ergänzungsprodukt wird von einem mit einem Saugorgan ausgestatteten Halteelement zunächst einseitig gehalten, anschliessend mittels eines Biegeelements in eine annähernd V-förmige Form gebogen und schliesslich an zwei gegenüberliegenden Seiten des Druckereiprodukts angedrückt.

### DARSTELLUNG DER ERFINDUNG

Es ist daher eine Aufgabe der Erfindung, ein gattungsgemässes Verfahren anzugeben, welches auf besonders einfache Weise den Zusammenhalt eines Stapels bzw. einer Kollektion aus lose aufeinanderliegenden ein- oder mehrlagigen Vorprodukten gleicher oder unterschiedlicher Grösse ermöglicht, derart, dass der Stapel bzw. die Kollektion für sich genommen sicher transportiert und gehandhabt werden kann und leicht wieder in die einzelnen Vorprodukte zerlegt werden kann.

Es ist weiterhin eine Aufgabe der Erfindung, entsprechende leicht handhabbare und unterscheidbare Zusammenstellungen von solchen Vorprodukten zu schaffen. Ein weiteres Ziel der Erfindung ist es, auf kostengünstige Art und Weise solche Zusammenstellungen zu erstellen.

Die Aufgaben werden durch Anspruch 1 gelöst. Das erfindungsgemässe Verfahren zum Konfektionieren eines Stapels aus lose aufeinanderliegenden bzw. einer Kollektion von lose aneinanderliegenden ein- oder mehrlagigen Vorprodukten, insbesondere Druckprodukten, gleicher oder unterschiedlicher Grösse, welcher Stapel bzw. welche Kollektion zwei aussen liegende Vorprodukte aufweist, bei welchem Verfahren dem Stapel bzw. der Kollektion ein die spätere Handhabung erleichternder Zusammenhalt gegeben wird, zeichnet sich dadurch aus, dass in einem ersten Schritt die zum Stapel bzw. zu der Kollektion gehörenden Vorprodukte bereitgestellt werden, und dass in einem zweiten Schritt wenigstens ein Verbindungselement derart angebracht wird, dass es die beiden aussen liegenden Vorprodukte des Stapels bzw. der Kollektion klebend überlappt.

Unter Stapeln werden hier grundsätzlich Zusammenstellungen von Vorprodukten verstanden, die übereinander liegen und von der Schwerkraft zusammengehalten werden. Sind die Vorprodukte in anderer räumlicher Orientierung, z.B. vertikal aneinander liegend ausgerichtet, werden sie hier als Kollektion bezeichnet. Die Erfindung bezieht sich auf solche verschiedene Arten der Zusammenstellungen der Vorprodukte.

Im Hinblick auf das Verständnis der Erfindung sei darauf hingewiesen, dass anders als bei anderen Klebeverbindungen von Druckprodukten, diese auf die vorerwähnten Vorprodukte im Rahmen einer kontinuierlich ablaufenden Weiterverarbeitung bzw. eines logistischen Gesamtprozesses ausgerichtet ist. Diese bilden autonome fertige Einheiten sowohl hinsichtlich Inhalt als auch Format, die beim Endverbraucher wieder vereinzelt und separat weiterverwendet werden. Sie wurden im Stand der Technik bisher einzeln im Rahmen der Weiterverarbeitung gehandhabt. Bei dem erfindungsgemäßen Verfahren werden im ersten Schritt die zum Stapel bzw. zu der Kollektion gehörenden Vorprodukte in Form des Stapels bzw. der Kollektion bereitgestellt. Der Stapel bzw. die Kollektion liegen in diesem Fall bereits fertig vor, wenn sie mit dem Verbindungselement versehen werden.

Grundsätzlich kann das Verbindungselement beide aussen liegenden Vorprodukte auf ihrer Aussenseite oder auf ihrer Innenseite überlappen. Eine bevorzugte Ausgestaltung des Verfahrens nach der Erfindung ist dadurch gekennzeichnet, dass das wenigstens eine Verbindungselement die beiden aussen liegenden Vorprodukte des Stapels bzw. der Kollektion jeweils auf der Aussenseite klebend überlappt. Hierdurch wird die Anbringung des Verbindungselements vereinfacht.

Überlappt das wenigstens eine Verbindungselement alternativ die beiden aussen liegenden Vorprodukte des Stapels bzw. der Kollektion jeweils auf der Innenseite klebend, bleibt das Aussehen der aussen liegenden Vorprodukte praktisch unbeeinträchtigt. Es muss allerdings dafür gesorgt werden, dass das Verbindungselement auf der entsprechenden Seite die notwendigen, kraftmässig hinreichenden Klebeigenschaften aufweist. Das erfindungsgemäße Verfahren ist dadurch gekennzeichnet, dass die Vorprodukte des Stapels bzw. der Kollektion jeweils eine bevorzugte Kante aufweisen, dass die Vorprodukte des Stapels bzw. der Kollektion im Stapel bzw. in der Kollektion so angeordnet und ausgerichtet sind, dass die bevorzugten Kanten der Vorprodukte zusammen eine Stapelkante bilden, und dass diese Stapelkante zur Anbringung des wenigstens einen Verbindungselements herangezogen wird.

Insbesondere können als bevorzugte Kanten der Vorprodukte solche Kanten genommen werden, an denen die Vorprodukte gefalzt und/oder geheftet und/oder geklebt sind. Weisen alle Vorprodukte des Stapels bzw. der Kollektion eine Falzkante auf, können diese Vorprodukte mit den Falzkante übereinander liegend bzw. aneinander liegend gestapelt werden, so dass die Stapelkante, in der das Verbindungselement angebracht wird, aus lauter Falzkanten besteht. Es ist aber auch denkbar, einige der Vorprodukte mit ihrer Falzkante auf der gegenüberliegenden Seite anzuordnen, um eine gleichmässigere Stapelhöhe zu erreichen.

Gemäss einer anderen Ausgestaltung der Erfindung werden mehrere Verbindungselemente längs der ausgewählten Stapelkante am Stapel bzw. an der Kollektion die beiden aussen liegenden Vorprodukte des Stapels bzw. der Kollektion überlappend angebracht. Hierdurch erhöht sich zwar der Aufwand, jedoch erhöht sich der Zusammenhalt des Stapels bzw. der Kollektion, weil Scherkräfte, die ein Verdrehen der Vorprodukte im Stapel bzw. in der Kollektion gegeneinander verursachen, besser aufgefangen werden können. Dies ist insbesondere von Vorteil bei einem Stapel bzw. einer Kollektion mit vielen schweren und oberflächlich glatten Vorprodukten.

Es ist im Rahmen der Erfindung aber auch denkbar, mehrere Verbindungselemente an mehreren ausgewählten Stapelkanten am Stapel bzw. der Kollektion die beiden aussen liegenden Vorprodukte des Stapels bzw. der Kollektion überlappend anzubringen. Das erfindungsgemäße Verfahren zeichnet sich dadurch aus, dass als Verbindungselement ein Klebestreifen verwendet wird. Unter Klebestreifen wird in diesem Zusammenhang ein Streifen eines geeigneten Materials wie zum Beispiel Papier oder Kunststofffolie oder -film verstanden, der zumindest auf einer Seite teilweise oder ganz mit einer Klebeschicht versehen ist. Der Klebestreifen ist an den Stellen, wo er die Vorprodukte klebend überlappt, mit einer solchen Klebeschicht ausgestattet. Als Klebstoff kommt hier vor allem ein Fugitiv-Klebstoff oder abschälbarer Klebstoff (Schälleim) in Betracht, der beim späteren Auseinandernehmen des Stapels ein einfaches Ablösen des Verbindungselements beziehungsweise Klebestreifens ermöglicht. Klebestreifen aus Papier werden bevorzugt auch aus ökologischen Gründen eingesetzt, da deren Entsorgung direkt zusammen mit den Vorprodukten aus Papier erfolgen kann. Diesfalls ist der örtlichen Anordnung der Klebestreifen gemäss Erfindung besonders Beachtung zu schenken, so dass die aussen liegenden Vorprodukte bezüglich Druck-/Lesebereichen nicht nachteilig beeinträchtigt werden.

Insbesondere ist der Klebestreifen länglich ausgebildet und weist eine konstante Breite auf. Hierdurch kann er einfach von einer Rolle abgezogen und für die Applizierung konfektioniert werden. Die länglich Form ermöglicht - wenn der Klebestreifen mit seiner Längsrichtung quer zur Stapelkante appliziert wird - eine ausreichend tiefe Überlappung der äusseren Vorprodukte bei gleichzeitig geringem Materialverbrauch, was insbesondere bei grossen Stückzahlen der Druckproduktstapel im Millionenbereich eine erhebliche Rolle spielt.

Eine weitere bevorzugte Ausführungsform der Erfindung setzt Klebestreifen ein, die eine mehrschichtige Struktur besitzen. Dabei ist es möglich, dass der Klebestreifen für sich zwei- oder mehrschichtig auf die Kollektion aufgebracht wird, oder auch dass die jeweiligen Klebestreifenabschnitte in gewünschter Länge von einem Trägermaterial abgelöst und auf die Kollektion aufgebracht werden. Im Rahmen der Mehrschichtigkeit kann auch besonderen Bedürfnissen besonderer Kollektionen Rechnung getragen werden. So ist es möglich, eine reissfeste Schicht mit einer gut bedruckbaren Schicht zu kombinieren oder beispielsweise eine separat ablösbare Schicht zusammen mit einer Trägerschicht aufzubringen. Die ablösbare Schicht kann dabei zudem besondere Aufgaben erfüllen, wie z.B. als Medium für Werbeinhalte aber auch Informationsinhalte (z.B. Codes oder Farbidentifikation) dienen.

Es ist aber auch denkbar, dass der Klebestreifen eine sich über die Länge verändernde Breite, insbesondere in einem Mittelbereich eine Verengung aufweist. Eine solche Verengung kann einerseits Bandmaterial sparen. Andererseits kann eine entsprechend gestaltete Verengung anstelle einer Perforation das spätere Auftrennen des Klebestreifens beim Auflösen des Stapels erleichtern. Allfällige Ecken auf der Aussenseite des Klebestreifens sollten zur Verringerung der Gefahr des unbeabsichtigten Einreissens aussen abgerundet sein.

Besonders einfach ist der Klebestreifen zu konfektionieren und anzubringen, wenn er eine in Längsrichtung durchgehende Klebeschicht aufweist, weil er dann nicht auf die Stapelkante einjustiert werden muss. Darüber hinaus kann die durchgehende Klebeschicht auch dazu beitragen, die mittleren Vorprodukte im Stapel randseitig zu fixieren und so den Zusammenhalt im Stapel bzw. in der Kollektion weiter zu erhöhen.

Es ist aber auch denkbar, dass der Klebestreifen eine in einem mittleren Abschnitt unterbrochener Klebeschicht und/oder kleberfreie bzw. nicht klebende Endabschnitte aufweist, um ein Ankleben an den mittleren Vorprodukten des Stapels zu vermeiden und/oder das spätere Auseinandernehmen des Stapels zu erleichtern. Die kleberfreien bzw. nicht klebenden Endabschnitte ermöglichen ein einfaches Ergreifen der Klebestreifen an ihren Enden, um sie dann vom Stapel bzw. der Kollektion abzuziehen.

Eine andere Ausgestaltung der Erfindung zeichnet sich dadurch aus, dass der Klebestreifen in Längsrichtung gesehen in der Mitte eine Perforation aufweist. Die Perforation ermöglicht es, zum Auflösen des Stapels bzw. der Kollektion den Klebestreifen in der Mitte ohne Hilfsmittel zu zerreissen. Die getrennten Hälften des Klebestreifens können dann einfach auf den äusseren Vorprodukten verbleiben und müssen nicht von den Vorprodukten abgelöst werden.

Wenn der Klebestreifen gemäss einer anderen Ausgestaltung der Erfindung durch Abtrennen von einem Klebeband bereitgestellt wird, ist es von Vorteil, dass zum erleichterten Abtrennen des Klebestreifens vom Klebeband das Klebeband an den Trennstellen mit entsprechenden Einkerbungen oder Einschnitten versehen ist. Hierdurch kann der Applikationsprozess beschleunigt werden, um grosse Stückzahlen verarbeiten zu können.

Eine andere Ausgestaltung des erfindungsgemässen Verfahrens ist dadurch gekennzeichnet, dass zum erleichterten Lösen des Verbindungselements in den Überlappungsbereichen zwischen dem Verbindungselement und den aussen liegenden Vorprodukten des Stapels bzw. der Kollektion vor dem Anbringen des Verbindungselements jeweils eine Trennschicht angeordnet wird. Besteht die Trennschicht beispielsweise aus einer aufgeklebten Folie mit glatter Oberfläche, kann ein aufgebrachter Klebestreifen beim späteren Auflösen des Stapels bzw. der Kollektion leicht und rückstandsfrei abgezogen werden. Wenn die Trennschicht beziehungsweise Folie farblos und durchsichtig ausgebildet ist, beeinträchtigt sie das Erscheinungsbild des jeweiligen Druckprodukts nur wenig. Die Erfindung zeichnet sich dadurch aus, dass zur Bereitstellung des zu konfektionierenden Stapels bzw. der zu konfektionierenden Kollektion die Vorprodukte in einer Zusammentragvorrichtung nacheinander in einer vorbestimmten Reihenfolge aufeinandergelegt bzw. aneinandergelegt werden. Hierdurch lässt sich auf flexible Weise ein Stapel bzw. eine Kollektion bilden, der (die) in Aufbau und Anzahl und Reihenfolge der Vorprodukte an die unterschiedlichsten Anforderungen leicht und schnell angepasst werden kann. Eine geeignete Zusammentragvorrichtung wird beispielsweise von der Anmelderin unter der Bezeichnung "FlyStream" angeboten.

Vorzugsweise wird in der Zusammentragvorrichtung der sich bildende Stapel bzw. die sich bildende Kollektion an einer Mehrzahl von hintereinander angeordneten Zuförderern vorbei geführt, wobei die Zuförderer dem Stapel bzw. der Kollektion jeweils wenigstens ein Vorprodukt zuführen. Wenn die Zuförderer einzeln ansteuerbar sind, kann die Stapelbildung bzw. Kollektionsbildung besonders flexibel erfolgen. Geeignete Zuförderer werden beispielsweise von der Anmelderin unter der Bezeichnung "JetFeeder" angeboten.

Es ist dabei denkbar, dass die Stapel bzw. Kollektionen am Ende der Zusammentragvorrichtung in einer Applikationsvorrichtung jeweils mit dem wenigstens einen Verbindungselement versehen werden, wodurch sich eine besonders kompakte Anordnung ergibt. Erfindungsgemäß wird in der Applikationsvorrichtung ein Klebeband von einer Klebebandrolle abgerollt, von dem abgerollten Klebeband ein Klebestreifen abgeschnitten und der abgeschnittene Klebestreifen an dem vorbeigeführten Stapel bzw. der angebracht.

Besonders einfach erfolgt die Applizierung, weil erfindungsgemäß der Stapel bzw. die Kollektion mit der ausgewählten Stapelkante voran durch die Applikationsvorrichtung transportiert wird, und weil der abgeschnittene Klebestreifen quer zur Transportrichtung des Stapels bzw. der Kollektion mit einer Klebeseite entgegen der Transportrichtung des Stapels bzw. der Kollektion orientiert derart bereitgehalten wird, dass der Stapel bzw. die Kollektion während seines (ihres) Transports durch die Applikationsvorrichtung den bereitgehaltenen Klebestreifen mit der ausgewählten Stapelkante in der Mitte trifft und mitnimmt. Es versteht sich dabei von selbst, dass die Ausrichtung des Klebestreifens so erfolgt, dass allfällige Perforationen oder kleberfreie Abschnitte im Bereich der Stapelkante zu liegen kommen.

Gemäss einer weiteren Ausgestaltung sind in der Applikationsvorrichtung Führungselemente vorgesehen, welche den vom Stapel bzw. der Kollektion aufgenommenen Klebestreifen überlappend an die beiden aussen liegenden Vorprodukte des Stapels bzw. der Kollektion andrücken. Hierdurch wird auf einfache Weise sichergestellt, dass der Klebestreifen an den äusseren Vorprodukten des vorbeibewegten Stapels bzw. der vorbeibewegten Kollektion klebend anliegt und den gewünschten Zusammenhalt des Stapels bzw. der Kollektion gewä h rleistet.

Es ist aber auch denkbar, dass die Stapel bzw. Kollektionen in einer Transportvorrichtung in Klammern gehalten durch eine Stapelverbindungs-Vorrichtung transportiert werden, und dass sie in der Stapelverbindungs-Vorrichtung jeweils mit dem wenigstens einen Verbindungselement versehen werden. Auf diese Weise kann die Konfektionierung der Stapel bzw. Kollektionen leicht in eine bestehende grössere Anlage integriert werden.

Die nicht beanspruchte Zusammenstellung in Form eines Stapels aus lose aufeinanderliegenden bzw. einer Kollektion von lose aneinanderliegenden ein- oder mehrlagigen Vorprodukten, insbesondere Druckprodukten, gleicher oder unterschiedlicher Grösse, welcher Stapel bzw. welche Kollektion zwei aussen liegende Vorprodukte aufweist, ist dadurch gekennzeichnet, dass zum Erzielen eines die spätere Handhabung erleichternden Zusammenhalts der Vorprodukte wenigstens ein Verbindungselement am Stapel bzw. der Kollektion derart angebracht, dass es die beiden aussen liegenden Vorprodukte des Stapels bzw. der Kollektion klebend überlappt. Unter ein- oder mehrlagigen Vorprodukten werden dabei auch ein- oder mehrblättrige Vorprodukte verstanden.

Eine Ausgestaltung der Zusammenstellung ist dadurch gekennzeichnet, dass das wenigstens eine Verbindungselement die beiden aussen liegenden Vorprodukte des Stapels bzw. der Kollektion jeweils auf der Aussenseite klebend überlappt.

Alternativ kann das wenigstens eine Verbindungselement aber auch die beiden aussen liegenden Vorprodukte des Stapels bzw. der Kollektion jeweils auf der Innenseite klebend überlappen, sodass der Überlappungsbereich nach aussen hin nicht sichtbar ist.

Eine andere Ausgestaltung der Zusammenstellung ist dadurch gekennzeichnet, dass die Vorprodukte des Stapels bzw. der Kollektion jeweils wenigstens eine bevorzugte Kante aufweisen, dass die Vorprodukte des Stapels bzw. der Kollektion im Stapel bzw. in der Kollektion so angeordnet und ausgerichtet sind, dass die bevorzugten Kanten der Vorprodukte zusammen wenigstens eine Stapelkante bilden, und dass das wenigstens eine Verbindungselement an dieser Stapelkante anbracht ist.

Insbesondere können mehrere Verbindungselemente längs der ausgewählten Stapelkante am Stapel bzw. an der Kollektion die beiden aussen liegenden Vorprodukte des Stapels bzw. der Kollektion überlappend angebracht sein.

Es ist aber auch denkbar, dass mehrere Verbindungselemente an mehreren ausgewählten Stapelkanten am Stapel bzw. der Kollektion die beiden aussen liegenden Vorprodukte des Stapels bzw. der Kollektion überlappend angebracht sind.

Gemäss einer bevorzugten Ausgestaltung ist das Verbindungselement ein Klebestreifen.

Vorzugsweise ist der Klebestreifen länglich ausgebildet.

Insbesondere weist der Klebestreifen eine konstante Breite auf. Es ist aber auch denkbar, dass der Klebestreifen eine sich über die Länge verändernde Breite, insbesondere in einem Mittelbereich eine Verengung aufweist. Zur Verringerung der Gefahr des unbeabsichtigten Einreissens sollten aussen am Klebestreifen abgerundete Randbereiche oder Ecken vorgesehen werden.

Gemäss einer anderen Ausgestaltung weist der Klebestreifen eine in Längsrichtung durchgehende Klebeschicht auf.

Zur erleichterten Auflösen der Zusammenstellung kann es von Vorteil sein, wenn der Klebestreifen eine in einem mittleren Abschnitt unterbrochene Klebeschicht und/oder kleberfreie bzw. nicht klebende Endabschnitte aufweist.

Es kann aber auch von Vorteil sein, wenn der Klebestreifen in Längsrichtung gesehen in der Mitte eine Perforation aufweist.

Eine weitere Ausgestaltung zeichnet sich dadurch aus, dass zum erleichterten Lösen des Verbindungselements in den Überlappungsbereichen zwischen dem Verbindungselement und den aussen liegenden Vorprodukten des Stapels bzw. der Kollektion jeweils eine Trennschicht angeordnet ist.

Der nicht beanspruchte Applikator zum Herstellen einer Zusammenstellung nach der Erfindung ist dadurch gekennzeichnet, dass der Applikator mindestens zwei Anpressflanken aufweist, welche je auf eine Seitenfläche der Zusammenstellung kraftschlüssig einwirken und dass der Applikator einen Freibereich zwischen den Anpressflanken besitzt, wobei der Applikator dem Aufbringen von mindestens einem Klebestreifen dient und der Freibereich bei diesem Aufbringen mindestens annähernd der Höhe der Zusammenstellung entspricht.

Eine Ausgestaltung des Applikators zeichnet sich dadurch aus, dass die Anpressflanken als seitliche Pressflächen, beispielsweise in Form von entsprechend gebogenen Führungsblechen, ausgebildet sind, bezüglich derer sich die Zusammenstellung bewegt und eine Relativgeschwindigkeit aufweist. Die vorzugsweise stationär angeordneten Pressflächen legen und drücken den Klebestreifen an die Aussenflächen der vorbeibewegten Zusammenstellung an. In einer alternativen Ausführungsform können die stationär angeordneten Pressflächen reibungsmindernd ausgebildet sein, was beispielsweise durch einen Rollenfläche oder eine entsprechende die Gleitreibung vermindernde Beschichtung erzielt wird.

Es ist aber auch denkbar, dass die Anpressflanken als umlaufende Bänder ausgebildet sind, welche die Zusammenstellung zwischen sich fördern. Hierdurch werden auf besonders einfache Weise der Transport der Zusammenstellung durch die Vorrichtung hindurch und die Applikation des bzw. der Klebestreifen(s) miteinander kombiniert. Anstelle der Bändern können aber auch entsprechend beabstandete Paare von aktiv fördernden Rollen zum Einsatz kommen, zwischen denen die Zusammenstellung hindurchgeführt wird.

In einer weiteren bevorzugten Ausführungsform ist der Applikator dadurch gekennzeichnet, dass mindestens eine Pressfläche oder Rollenfläche in Flächenrichtung der Zusammenstellung relativ zu dieser Zusammenstellung räumlich beweglich und über eine Kante der Zusammenstellung einschiebbar ist, so dass mindestens ein Klebestreifen an dieser Kante bzw. an den aussen liegenden Vorprodukten appliziert wird.

Die derart gebildeten Stapel bzw. Kollektionen sind insbesondere bei Hochgeschwindigkeitsprozessen (Verarbeitung in der Grössenordnung von fünf, zehn oder mehr Produkten pro Sekunde) oder bei komplex gebildeten Stapeln von grossem Vorteil, namentlich wenn eine genaue gegenseitige Ausrichtung der Vorprodukte bei der Weiterverarbeitung von Bedeutung ist oder wenn bei einem Weiterverarbeitungsschritt die unerwünschte Möglichkeit einer "Vermischung" der Vorprodukte einer Kollektion mit denjenigen anderer Kollektionen bzw. eine Situation mit problematischer Wiederauftrennung nebeneinander liegender Kollektionen besteht.

Gerade wenn eine exakte gegenseitige Ausrichtung der Vorprodukte für den Weiterverarbeitungsprozess der Vorprodukte bzw. der Kollektion erwünscht ist, kann die vorliegende erfindungsgemässe Lösung mit einer zusätzlichen Klebeverbindung der Vorprodukte untereinander ergänzt bzw. kombiniert werden.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: in perspektivischer Ansicht einen Stapel mit mehreren unterschiedlich grossen Vorprodukten, welcher gemäss einem Ausführungsbeispiel an einer Stapelkante mit einem Klebestreifen versehen ist;
- Fig. 2: den Stapel aus Fig. 1, der gemäss einem anderen Ausführungsbeispiel an derselben Stapelkante mit zwei voneinander beabstandeten Klebestreifen gleicher Art versehen ist;
- Fig. 3: einen Stapel aus gleich grossen aber unterschiedlich dicken Vorprodukten, der gemäss einem weiteren Ausführungsbeispiel wie in Fig. 1 mit einem Klebestreifen versehen ist;
- Fig. 4: einen Stapel aus gleich grossen und gleich dicken Vorprodukten; der gemäss einem anderen Ausführungsbeispiel mit einem sich in Kantenrichtung erstreckenden Klebestreifen zusammengehalten ist;
- Fig. 5: von links nach rechts nebeneinander dargestellt verschiedene Formen von Klebestreifen beziehungsweise Verbindungselementen für das Verfahren nach der Erfindung;
- Fig. 6: in einer zur Fig. 2 vergleichbaren Darstellung ein Stapel mit zwei voneinander beabstandeten Klebestreifen gleicher Art, die im mittleren Bereich eine Verengung aufweisen, in der Gesamtansicht (Fig. 6(a)) und in einem vergrösserten Ausschnitt (Fig. 6(b));
- Fig. 7: in einer perspektivischen Ansicht einen in einer Halterung gesammelten Stapel von Vorprodukten, der in der Halterung mit einem Klebestreifen versehen worden ist;
- Fig. 8: den verklebten Stapel aus Fig. 1, wobei gemäss einem weiteren Ausführungsbeispiel unter dem Klebestreifen jeweils eine Trennschicht angeordnet ist;
- Fig. 9: den unverklebten Stapel aus Vorprodukten gemäss Fig. 1;
- Fig. 10: in einer Seitenansicht den prinzipiellen Aufbau einer Stapelverbindungs-Vorrichtung zum Applizieren von Klebestreifen gemäss einem anderen Ausführungsbeispiel;
- Fig. 11: in der Draufsicht von oben eine Zusammentragvorrichtung zur Bereitstellung und Konfektionierung von Vorprodukte-Stapeln gemäss einem anderen Ausführungsbeispiel;
- Fig. 12: in einem vergrösserten Ausschnitt die Applikationsvorrichtung aus der Zusammentragvorrichtung der Fig. 11;
- Fig. 13: in mehreren Teilfiguren (a)-(c) verschiedene Schritte des erfindungsgemäßen Verfahrens beim Applizieren der Klebestreifen in der Applikationsvorrichtung aus Fig. 12;
- Fig. 14: eine Möglichkeit, die in einer Zusammentragvorrichtung gebildeten Stapel zu einer an einem anderen Ort befindlichen Applikationsvorrichtung zu transportieren;
- Fig. 15: eine weitere Möglichkeit, die gebildeten Stapel weiter zu transportieren;
- Fig. 16: das nicht beanspruchte Ausbilden einer Tasche zum Einstecken der übrigen Vorprodukte gemäss einem anderen Ausführungsbeispiel;
- Fig. 17: das Einstecken der übrigen Vorprodukte in die gemäss Fig. 16 gebildete Tasche aus den aussen liegenden Vorprodukten; und
- Fig. 18: einen Stapel gemäss einem Ausführungsbeispiel mit einem Klebestreifen, der das obere Vorprodukt des Stapels vollständig überlappt und mit einem eingeschlagenen Endabschnitt auf einer Innenseite des oberen Vorprodukts angeklebt ist.

### WEGE ZUR AUSFÜHRUNG DER ERFINDUNG

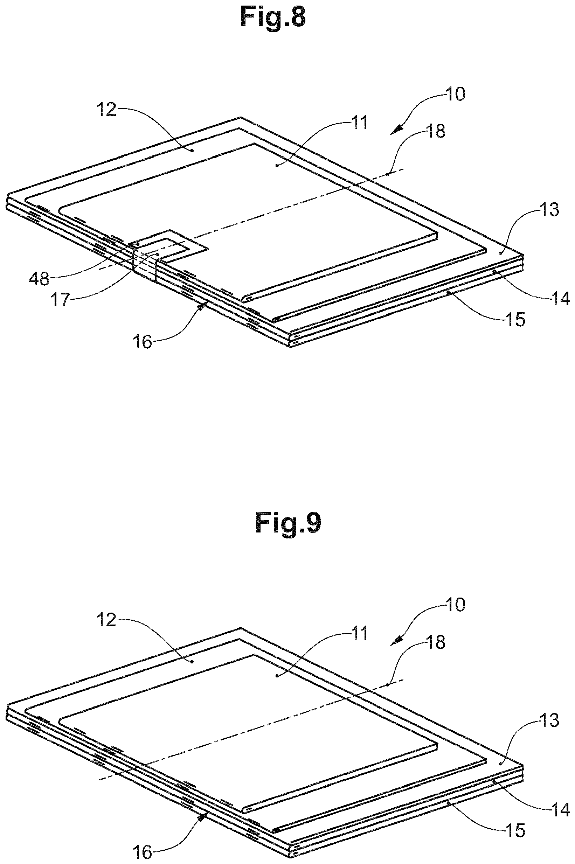

Das erfindungsgemässe Verfahren geht aus von einem Stapel von Vorprodukten, wie er in Fig. 9 in perspektivischer Ansicht dargestellt ist. Der Stapel 10 umfasst in diesem Beispiel insgesamt fünf Vorprodukte 11, 12, 13, 14 und 15. Alle Vorprodukte 11-15 des Stapels 10 weisen im Beispiel eine Falzkante auf und sind in der Falzkante geheftet. Die Vorprodukte können beispielsweise Druckprodukte sein. Es versteht sich von selbst, dass die Vorprodukte im Rahmen der Erfindung auch eine andere Machart, Funktion, Gestalt und gegenseitige Anordnung haben können.

In den nachfolgenden Erläuterungen der Ausführungsbeispiele wird stets von Stapeln gesprochen, zu denen die Vorprodukte aufgeschichtet sind. Unter Stapeln werden dabei Zusammenstellungen von Vorprodukten verstanden, die übereinander liegen und zunächst von der Schwerkraft zusammengehalten werden. Sind die Zusammenstellungen nicht aufeinander liegend angeordnet, sondern in einer anderen räumlichen Orientierung, z.B. vertikal ausgerichtet, aneinander liegend ausgebildet, werden sie allgemein als Kollektion bezeichnet. Die Erfindung bezieht sich auf beide Arten von Zusammenstellungen der Vorprodukte.

Die Vorprodukte 11-15 liegen im Stapel 10 so übereinander, dass ihre Falzkanten eine gemeinsame Stapelkante 16 des Stapels 10 bilden. Die Vorprodukte 11-15, die Werbebroschüren, Flyer, aber auch Warenproben, CDs oder dergleichen sein können, haben im dargestellten Beispiel eine unterschiedliche Grösse. Das obere Druckprodukt 11 ist in Figur 9 deutlich kleiner als das darunter liegende Druckprodukt 12 und noch kleiner als die weiteren Vorprodukte 13-15. Die Vorprodukte 11 und 15 sind die aussen liegenden Vorprodukte des Stapels 10. Sie spielen für das erfindungsgemässe Verfahren eine besondere Rolle. Alle Vorprodukte 11-15 sind im Stapel 10 vorzugsweise so angeordnet, dass sie symmetrisch zu einer gemeinsamen Mittellinie 18 liegen. Die Summe der Vorprodukte 11 bis 15 bildet (im komprimierten Zustand) die Höhe des Stapels bzw. der Zusammenstellung.

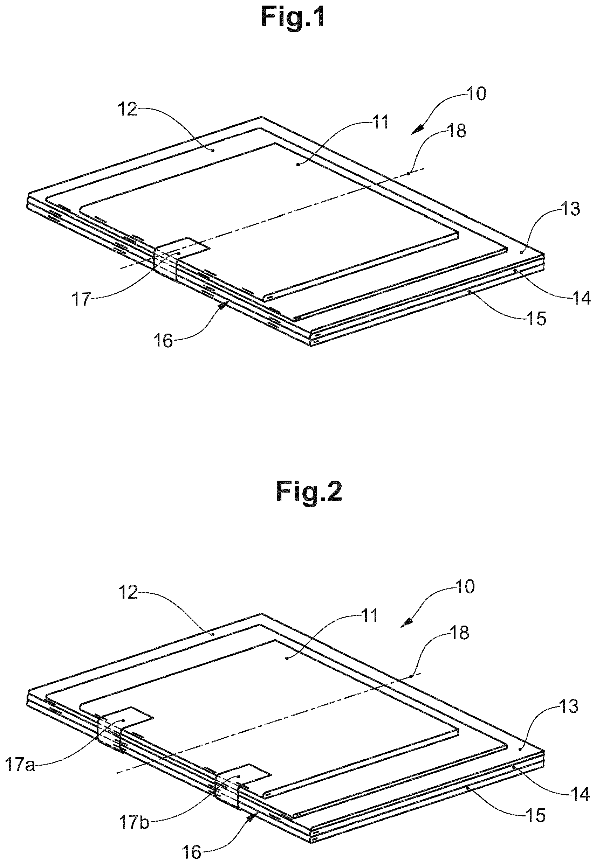

Im einfachsten Fall wird nun gemäss Fig. 1 der Zusammenhalt des Stapels 10, der sonst nur über das Gewicht der Vorprodukte und die Reibung zwischen den Vorprodukten bestimmt wird, dadurch wesentlich verbessert, dass als Verbindungselement ein Klebestreifen 17 so über die Stapelkante 16 des Stapels 10 geklebt wird, dass er die beiden äusseren Vorprodukte 11 und 15 auf deren Aussenseite klebend überlappt. Durch Applizieren des Klebestreifens 17 bilden die beiden äusseren Vorprodukte 11 und 15 gewissermassen eine Tasche, in welcher die übrigen (inneren) Vorprodukte 12-14 liegen. Wird ein Klebestreifen 17 mit durchgehender Klebeschicht verwendet, kann eine zusätzliche Fixierung dadurch erreicht werden, dass der Klebestreifen auch an den Falzkanten der inneren Vorprodukte 12-14 zumindest leicht haftet.

Wird-wie in Fig. 1 gezeigt-nur ein einzelner Klebestreifen 17 zur Verbindung verwendet, ist es von Vorteil, wenn dieser genau in der Mittellinie 18 des Stapels 10 platziert wird. Werden - wie in Fig. 2 gezeigt - nebeneinander an der Stapelkante zwei Klebestreifen 17a und 17b angebracht, geschieht dies vorzugsweise symmetrisch zur Mittellinie 18 des Stapels. Für die Stabilität des Stapels ist es dabei von Vorteil, wenn die Klebestreifen 17a und 17b so weit wie möglich auseinander liegen.

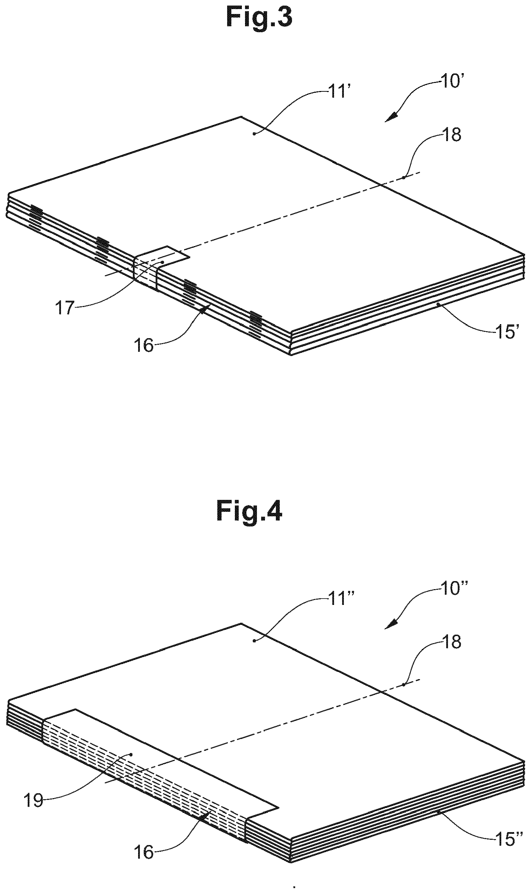

Grundsätzlich wäre es denkbar, zusätzlich zu einem oder mehreren Klebestreifen 17 beziehungsweise 17a,b an der Stapelkante 16 weitere Klebestreifen an anderen Kanten vorzusehen, was jedoch im Falle des in Fig. 1 und 2 dargestellten Stapels 10 aus unterschiedlich grossen Vorprodukten problematisch ist. Darüber hinaus erfordert das Anbringen von zusätzlichen seitlichen Klebestreifen einen erheblichen apparativen Aufwand, ohne entscheidende Vorteile zu bringen. Besteht der Stapel 10', wie in Fig. 3 dargestellt, aus gleich grossen Vorprodukten 11', 15', können an anderen Stapelkanten leichter zusätzliche Klebestreifen angebracht werden.

Das Ausführungsbeispiel der Fig. 4, bei dem ebenfalls ein Stapel 10" mit gleich grossen Vorprodukten 11", 15" vorausgesetzt wird, unterscheidet sich von den Ausführungsbeispielen der Fig. 1-3 dadurch, dass hier an der Stapelkante 16 ein Klebestreifen 19 in Kantenrichtung aufgebracht ist. Diese Art der Anordnung des Klebestreifens 19 ergibt gegenüber der Anordnung aus Fig. 1 einen erhöhten Zusammenhalt, erschwert jedoch das präzise Aufbringen und spätere Auflösen des Stapels 10". In allen Fällen überlappt jedoch der Klebestreifen 17 bzw. 17a,b bzw. 19 die beiden aussen liegenden Vorprodukte 11, 15 bzw. 11', 15' bzw. 11 ", 15".

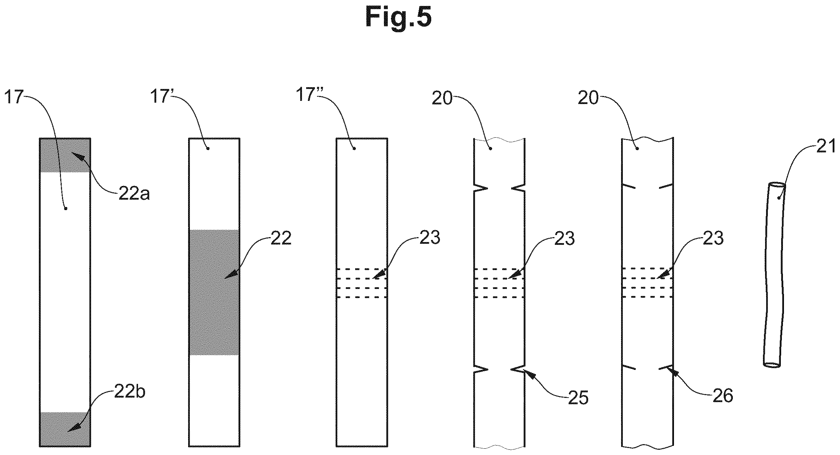

Fig. 5 zeigt in der Draufsicht verschiedene Arten von Verbindungselementen beziehungsweise Klebestreifen, die von links nach rechts nebeneinander dargestellt sind. Der ganz links stehende Klebestreifen 17 hat eine einfache längliche, rechteckige Form (mit konstanter Breite) und ist grundsätzlich mit einer durchgehenden Klebeschicht versehen. Er kann jedoch kleberfreie bzw. nicht klebende (z.B. auf der Innenseite durch einen Folienabschnitt abgedeckte) Endabschnitte 22a, 22b aufweisen, an denen man beim Abziehen des Klebestreifens diesen leichter greifen kann. Der rechts daneben stehende Klebestreifen 17' hat dieselbe Grundform, weist jedoch einen mittleren Abschnitt 22 (in Fig. 5 grau unterlegt) auf, in welchem die Klebeschicht fehlt. Hierdurch kann verhindert werden, dass der Klebestreifen 17' an den mittleren Vorprodukten (12-14 in Fig. 1) fest klebt und so das Auflösen des Stapels erschwert. Ein weiterer Klebestreifen 17" in Fig. 5 weist in der Mitte eine Perforation 23 auf, die es ermöglicht, den Klebestreifen an dieser Stelle ohne Hilfsmittel aufzutrennen und so den damit verklebten Stapel leichter aufzulösen. Bei besonderen Ausführungsformen werden bevorzugt die Hafteigenschaften der Endabschnitte 22a, 22b und/oder des mittleren Abschnitts 22 gezielt variiert.

Insbesondere auch um die Ablösung des Klebestreifens von den aussen liegenden Vorprodukten zu optimieren, können die Endabschnitte Flächenbereiche mit höherer und geringerer Haftkraft aufweisen, so dass unterschiedliche Klebeigenschaften gezielt beeinflusst werden können. Zu diesem Zwecke kann die Haftkraft kontinuierlich von den beiden lateralen Endkanten des Klebestreifens gegen den mittleren Bereich hin abnehmen oder es können nur die Aussenkanten der Endabschnitte 22a, 22b stark haftend ausgebildet werden. Da die Klebestreifen 17 bei Verwendung der Kollektionen vorab auf Zugkraft beansprucht sind, kann bei bevorzugten Ausführungsformen ein leicht abschälbarer Haftstoff zum Einsatz kommen, der beim Ablösen eine Beschädigung der aussen liegenden Vorprodukte minimiert oder vermeidet und dabei trotzdem einen hinreichenden Kraftschluss beim Handling der Kollektionen gewährleistet.

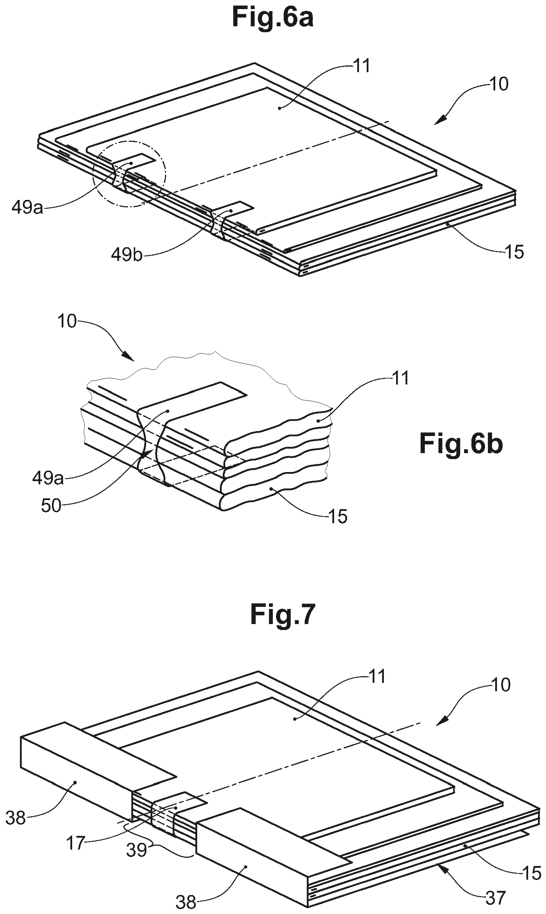

Es ist aber auch denkbar, dass gemäss Fig. 6 die Klebestreifen 49a, 49b eine sich über die Länge verändernde Breite, insbesondere in einem Mittelbereich eine Verengung 50, aufweisen. Eine solche Verengung 50 (Fig. 6(b)) kann einerseits Bandmaterial sparen. Andererseits kann eine entsprechend gestaltete Verengung anstelle einer Perforation das spätere Auftrennen des Klebestreifens beim Auflösen des Stapels erleichtern. Soll ein unbeabsichtigtes Einreissen des Klebestreifens erschwert oder verhindert werden, ist es vorteilhaft, aussen liegende Ecken oder Kantenbereiche abzurunden, um damit verbundene Kerbeffekte zu vermeiden.

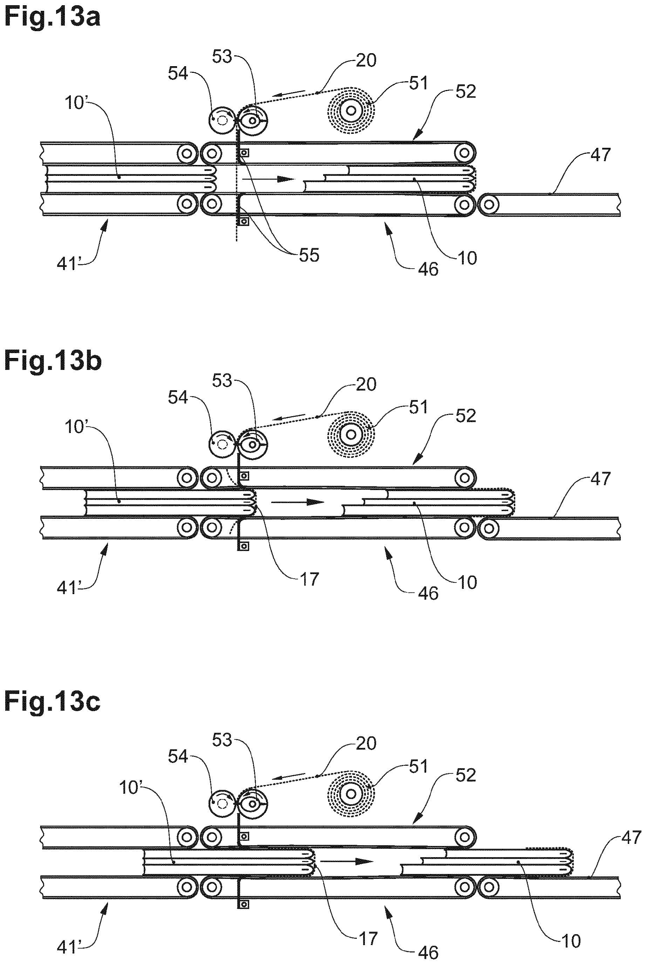

Werden die Klebestreifen von einem beispielsweise auf einer Rolle aufgerollten Klebeband 20 abgetrennt (siehe das 4. und 5. Beispiel von links in Fig. 5; siehe auch die Klebebandrolle 51 in Fig. 13), kann hingegen durch entsprechend angebrachte Einkerbungen 25 beziehungsweise Einschnitte 26 auf dem Klebeband 20 das Abtrennen erleichtert werden. Wenn zusätzlich eine Perforation 23 vorgesehen ist, müssen die Einkerbungen 25 beziehungsweise Einschnitte 26 in ihrer Lage auf dem Klebeband 20 auf die dortige Perforation 23 abgestimmt sein.

Die Klebestreifen 17, 17', 17" bzw. 17a,b und 19 können als Trägermaterial ein Papier oder eine Kunststofffolie oder einen Kunststofffilm haben, die zumindest einseitig in den vorgesehenen Bereichen oder vollständig (durchgehend) mit einer Klebeschicht versehen sind. Die Kunststofffolie beziehungsweise der Kunststofffilm können durchsichtig und klar sein, um am Stapel möglichst wenig aufzufallen und den Gesamteindruck zu stören. Sie können aber auch eingefärbt oder zu Werbe- oder Informationszwecken mit einer Beschriftung oder Bildern versehen sein. In weiteren Anwendungen werden die Klebestreifen als Informationsträger eingesetzt. Die Information kann aus Farb- oder digitalen Codes bestehen oder aber auch andere optisch oder elektronisch lesbare Informationen enthalten. Es ist auch denkbar, in den Klebestreifen faserförmige Verstärkungen vorzusehen, oder Aussparungen und Ausstanzungen. Neben der Möglichkeit diese Werbe- oder Informationsinhalte auf die Klebestreifen aufzubringen (Druck, mechanische Codierung usw.) kann bei mehrschichtigem Aufbau der Klebestreifen der Werbe- oder Informationsträger auch zwischen den Schichten eingebracht sein. Dieses Einbringen eines Werbe- bzw. Informationsträgers kann dauerhaft oder aber auch gezielt ab- oder auslösbar vorgenommen werden.

Ausserdem wird durch Aufbringen z.B. farbiger Codierungen bewirkt, eine Zusammenstellung optisch gut - auch von der Aussenseite - erkennbar zu machen, was insbesondere bei Stapeln oder Stangen einer Vielzahl (teilweise oder ganz) voneinander abweichender Zusammenstellungen deren Handhabung für Bedien- oder Verteilpersonal im Arbeitsprozess unterstützt.

Wenn gemäss Fig. 1-4 ein Klebestreifen 17, 17a,b oder 19 um die Stapelkante 16 herum auf die Aussenseiten der aussen liegenden Vorprodukte 11, 15 bzw. 11', 15' bzw. 11", 15" geklebt wird, kann es, insbesondere wenn die Oberflächen der Vorprodukte nicht besonders glatt sind, beim Ablösen der Klebestreifen während des Auflösens des Stapels dazu kommen, dass die Vorprodukte beschädigt werden. Um derartige Beschädigungen beim Ablösen der Klebestreifen sicher zu vermeiden, können die äusseren Vorprodukte 11, 15 gemäss Fig. 8 vor dem Aufkleben der Klebestreifen 17 mit einer Trennschicht 48 versehen werden, von der die Klebestreifen 17 leicht und rückstandslos abgelöst beziehungsweise abgezogen werden können. Derartige Trennschichten 48 können beispielsweise selbstklebende Kunststofffolien oder -filme mit einer glatten Oberfläche sein. Solche Systeme sind aus dem Bereich der wiederverschliessbaren Beutel oder dgl. bekannt.

Die Bildung der Stapel 10 kann gemäss Fig. 7 dadurch erfolgen, dass die Vorprodukte 11-15 nacheinander mit ihrer Falzkante voran in eine entsprechende (schräg stehende) Halterung 37 eingeschoben oder eingeworfen werden, in der sie mit den Falzkanten an einer entsprechenden Winkelleiste 38 innen anliegen. An den Stellen, an denen später der Klebestreifen 17 appliziert werden soll, sind an der Halterung 37 Aussparungen 39 vorgesehen, die einen freien Zugang von aussen zu dem entsprechenden Abschnitt der Stapelkante gewähren.

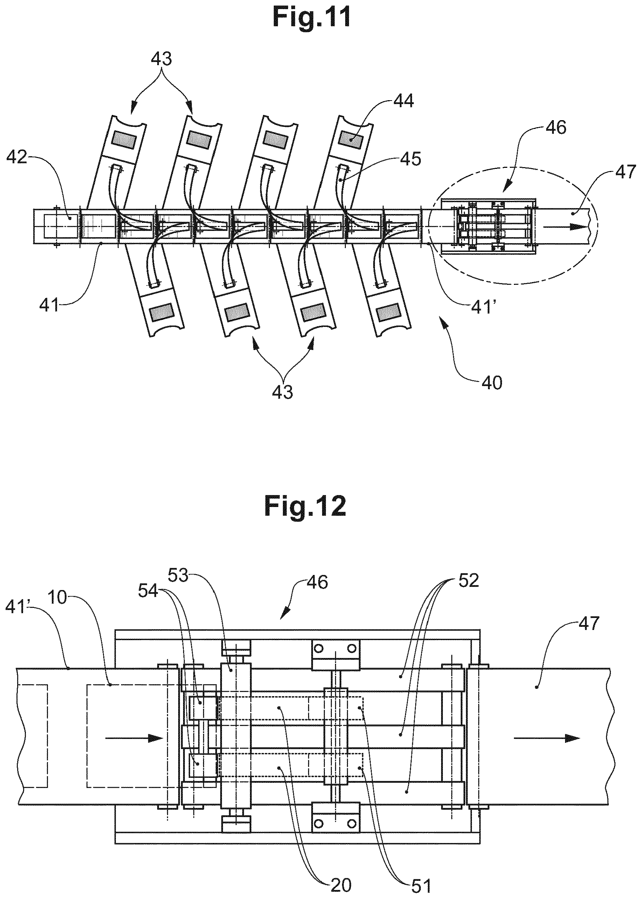

Derartige Halterungen 37 können Teil einer in Fig. 11 dargestellten Zusammentragvorrichtung 40 sein, die ein umlaufendes Transportmittel 41 mit darauf in Transportrichtung hintereinander angeordneten Sammelabschnitten bzw. Abteilen 42 umfasst, in die hinein aus seitlich am Transportmittel 41 aufgestellten Zuförderern 43 über entsprechende Kurvenbahnen 45 nacheinander Vorprodukte eingeführt werden, die in den Zuförderern 43 jeweils in einem Vorratsschacht 44 vorgehalten werden. Durch entsprechende Ansteuerung der Zuförderer 43 können die im Stapel abzulegenden Vorprodukte ausgewählt und dem Stapel zugeführt werden. Durch mehrfaches Umlaufen der Sammelabschnitte 42 kann auch die Reihenfolge der Vorprodukte im Stapel verändert oder ein fehlendes Druckprodukt ergänzt werden. Die fertig gesammelten Stapel werden dann mittels eines weiteren Transportmittels 41' an eine nachfolgende Applikationsvorrichtung (Applikator) 46 überführt und dort mit den Verbindungselementen beziehungsweise Klebestreifen ausgestattet und schliesslich an einer Stapelausgabe 47 ausgegeben.

Fig. 12 zeigt in einer Draufsicht von oben den vergrösserten Ausschnitt aus Fig. 11 (strichpunktiertes Oval), der die Applikationsvorrichtung bzw. den Applikator 46 beinhaltet. Fig. 13 zeigt in einer Seitenansicht verschiedene Schritte beim Applizieren der Klebestreifen in der Applikationsvorrichtung bzw. dem Applikator 46 aus Fig. 12. Im dargestellten Beispiel werden erfindungsgemäß die von der Zusammentragvorrichtung 40 bzw. dem Transportmittel 41' angelieferten Stapel 10 bzw. 10' gemäss Fig. 2 mit zwei voneinander beabstandeten Klebestreifen 17a und 17b versehen. Dazu wird jeweils ein entsprechendes Klebeband 20 von einer bereitgehaltenen Klebebandrolle 51 ein vorgegebenes Stück weit abgerollt (Fig. 13(a)). Das abgerollte Klebeband 20 wird zwischen einer (angetriebenen) walzenförmigen, rotierenden Schneidvorrichtung 53 und einer zugeordneten Gegenrolle 54 hindurchgeführt, zusammen in dieser Ausführungsform die erfindungsgemässe Klebeband-Speisung des Applikators bildend, und dadurch vorwärts bewegt. Gleichzeitig schneidet, wenn das Klebeband 20 mit einer vorgegebenen Länge abgerollt worden ist, die rotierende Schneidvorrichtung 53 einen entsprechenden Abschnitt des Klebebandes 20 ab.

Der Abschneideschritt ist zeitlich koordiniert mit dem Transport der Stapel 10 bzw. 10' durch die Applikationsvorrichtung 46. Die Stapel 10, 10' werden in Fig. 13 von links nach rechts zunächst zwischen zwei Bändern des Transportmittels 41' herantransportiert und dann an eine Transportvorrichtung 52 übergeben, die ebenfalls zwei parallele Bänder aufweist. Wenn der durch die Transportvorrichtung 46 transportierte Stapel 10, 10' mit seiner (vorderen) Stapelkante den quer zur Transportrichtung bereitgehaltenen Klebestreifen 17 erreicht, wird dieser gleichzeitig vom Klebeband 20 abgeschnitten. Der abgeschnittene Klebestreifen 17 wird dann, wie in Fig. 13(b) erkennbar, von dem Stapel 10' erfindungsgemäß mitgenommen.

Zwei oberhalb und unterhalb der Transportbahn der Stapel 10, 10' angeordnete Leitbleche 55, an denen auch das Klebeband 20 vertikal entlang geführt wird, sorgen durch entsprechend gekrümmte, innen liegende Enden (und gegebenenfalls langgestreckte Folgeflächen), die als Anpressflanken wirken und auf die Seitenflächen der Stapel bzw. Zusammenstellungen 10, 10' kraftschlüssig einwirken, dafür, dass bei dem sich zwischen den Leitblechen 55 hindurch bewegenden Stapel 10' der mitgenommene Klebestreifen 17 sich an den Aussenseiten des Stapels klebend anlegt (Fig. 13(b) und (c)). Um die Gleitreibung zu vermindern, können bei bevorzugten Ausführungsformen die stationär angeordneten Anpressflanken (bzw. Pressflächen) reibungsmindernd ausgebildet sein. Dazu wird eine die Gleitreibung vermindernde Beschichtung eingesetzt oder es kommen Rollenflächen zum Einsatz. Zwischen den beiden übereinander angeordneten Leitblechen 55 ist dafür ein Freibereich vorhanden, welcher annähernd der Höhe der Zusammenstellungen bzw. Stapelhöhe der Stapel 10, 10' entspricht. Die Leitbleche 55 können - wie andere streifenführende Bauteile auch - im übrigen quer zur Transportrichtung der Streifen ein leicht gekrümmtes Profil aufweisen, um die Streifen während des Transports bzw. der Applikation in Form und Lage zu stabilisieren. Auf diese Weise folgen die Klebestreifen mit ihrer nichtklebenden Seite bevorzugt in Transportrichtung den Mantellinien eines Zylinders, der dann in ebene Anpressflanken übergeht. Die mit den Klebestreifen 17 versehenen Stapel 10, 10' werden schliesslich über die Stapelausgabe 47 abgegeben.

Die Anpressflanken können aber auch - ähnlich wie die Bänder der Transportvorrichtung 52 - als umlaufende Bänder ausgebildet sein, welche die Zusammenstellungen bzw. Stapel 10, 10' zwischen sich fördern und gleichzeitig die Klebestreifen um die Stapelkante legen. Anstelle der Bänder können aber auch entsprechend dimensionierte und beabstandete Paare von Rollen zum Einsatz kommen, welche die Zusammenstellungen bzw. Stapel 10 aktiv fördern.

Im in Fig. 13 dargestellten Ausführungsbeispiel des Applikators 46 befinden sich die seitlichen Pressflächen der Leitbleche 55 in Ruhe (sind stationär), während sich die Stapel 10, 10' relativ dazu durch den Applikator 46 hindurch bewegen bzw. transportiert werden. Es ist aber auch denkbar, die Stapel 10, 10' ruhen zu lassen (oder die Stapel im Wesentlichen quer zu ihren Seitenflächen zu bewegen) und die Pressflächen mit dem Klebestreifen am Stapel entlang zu bewegen, um den Klebestreifen zu applizieren. Zu diesem Zwecke können die (bewegten) Pressflächen oder alternativ auch Rollenflanken, bevorzugt mit dem anzubringenden Klebestreifen, in Flächenrichtung der Stapel über die ausgerichteten Stapelkanten der Vorprodukte eingeschoben werden, so dass der Klebestreifen an diesen Kanten bzw. an den aussen liegenden Vorprodukten appliziert wird.

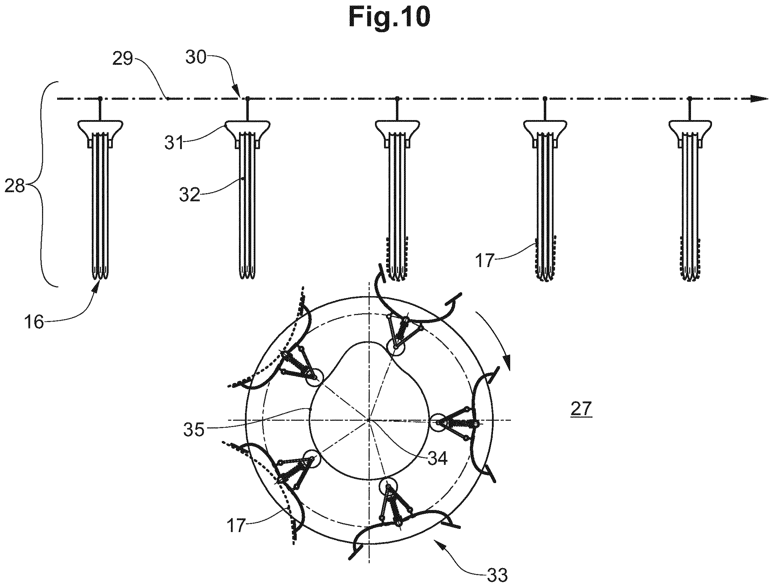

Es ist aber auch denkbar, gemäss der schematischen Darstellung in Fig. 10 die fertig ausgebildeten Stapel 32 mittels einer Transportvorrichtung 28 in Klammern 31 bzw. Greifern gehalten durch eine Stapelverbindungs-Vorrichtung 27 zu transportieren, wo sie von einer synchron um eine Drehachse 34 rotierenden Applikationsvorrichtung 33 mit Klebestreifen 17 versehen werden. Die Stapel 32 werden dabei von mit Klammern 31 ausgestatteten Haltevorrichtungen 30 gehalten, die in gleichmässigen Abständen in Transportrichtung hintereinander an einem Trägerband 29 angeordnet sind. In der Applikationsvorrichtung 33 sind um die Drehachse 34 herum laufend Streifenapplikatoren 36 angeordnet, die durch eine entsprechende Steuerkulisse 35 gesteuert die bereitgestellten Klebestreifen 17 aufnehmen und an den Stapelkanten 16 der vorbeigeführten Stapel 32 applizieren. In der in Figur 10 gezeigten Ausführungsform hängen die Kollektionen mit der Stapelkante 16 frei nach unten hängend. Die Klebestreifen 17 werden hier an der freien (hängenden) Kante appliziert, die bei Bedarf auch durch eine Hilfsvorrichtung stabilisiert werden kann (z.B. eine hier nicht weiter dargestellte Leitschiene oder mitlaufende Stütz- oder Klemmelemente, wie diese im Stand der Technik vorbekannt sind). Es ist selbstredend möglich und bei anderen Gegebenheiten auch besonders bevorzugt, den Applikator 33 so anzuordnen (unter Umständen auch seitlich oder über der Transportvorrichtung 28, dass die Klebestreifen an der oberen, durch die Klammern 31 gehaltenen Kanten aufgebracht werden. Diese Lösung ist deshalb besonders vorteilhaft, weil an der durch die Klammern 31 gehaltenen Seite die Vorprodukte der jeweiligen Kollektion bereits zusammengehalten bzw. -gepresst sind und dadurch die für die Klebestreifenaufbringung erwünschte Kompression der Stapelkanten 16 gegeben ist.

In analoger Weise ist es möglich, die Kollektionen so zu fördern, dass die Klebestreifen 17 an einer seitlichen Kante appliziert werden.

Weiterhin ist es bevorzugt, dass der Applikator 46 mindestens eine Pressfläche oder Rollenfläche (günstigerweise deren zwei) aufweist, die in Flächenrichtung der Zusammenstellung relativ zu dieser Zusammenstellung räumlich beweglich und über eine Kante der Zusammenstellung einschiebbar ist. Zu diesem Zweck können die Zusammenstellungen an ihren Seitenflächen (beispielsweise durch - dauerhaft oder temporär zugeordnete - Leitbleche oder Klammern) stabilisiert werden. Analog zu Figur 10 würden auf diese Weise Press- bzw. Rollenfläche entsprechend (schräg) von unten kommend über die hängenden Zusammenstellungen eingeschoben. Auf diese Weise kann ein oder können mehrere Klebestreifen im Bereich der hier unten liegenden Stapelkante an den aussen liegenden Vorprodukten appliziert werden. Selbstverständlich kann dieser Vorgang auch an (temporär) ruhenden Produkten in einfacherer Weise vorgenommen werden.

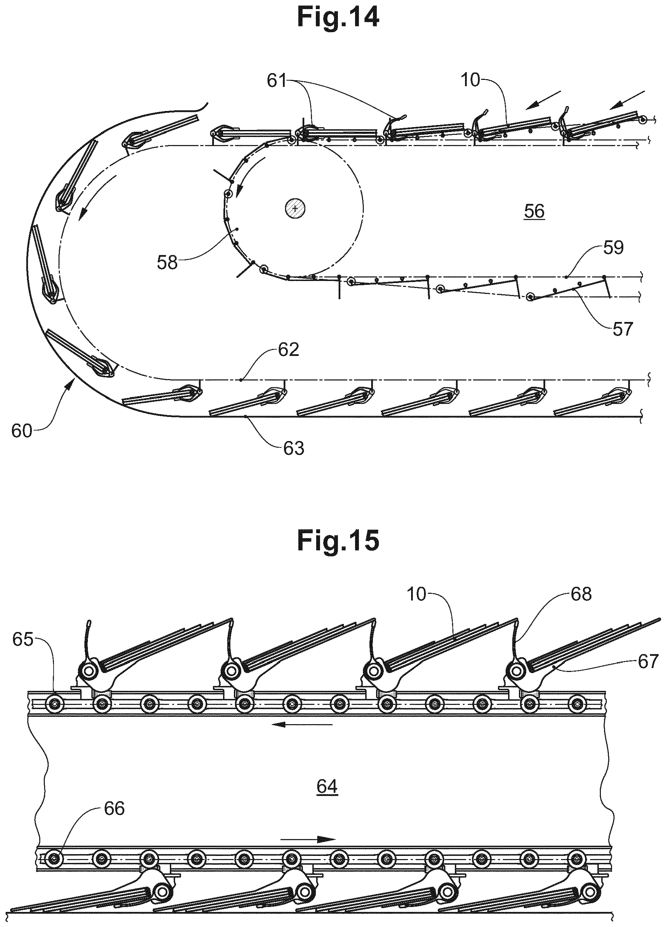

Während beim Ausführungsbeispiel der Fig. 11 die zusammengetragenen Stapel aus den Vorprodukten unmittelbar nach dem Zusammentragen in der nachfolgenden Applikationsvorrichtung 46 mit den gewünschten Klebestreifen 17 versehen werden, ist es auch möglich, das Zusammentragen und das Applizieren der Klebestreifen an unterschiedlichen Orten durchzuführen. Wie in Fig. 14 beispielhaft dargestellt ist, werden dort in einer Zusammentragvorrichtung 56, in der eine Vielzahl von Abteilen 57 auf einer Umlaufbahn 59 umlaufen und mittels einer Umlenkrolle 58 umgelenkt werden, die Stapel 10 zusammengetragen und vor der Umlenkung an der Umlenkrolle 58 von einer Transportvorrichtung 60 übernommen, die vor der Umlenkrolle 58 parallel zur Zusammentragvorrichtung 56 geführt ist und mittels entsprechender Greifer 61 die zusammengetragenen Stapel 10 aus den Abteilen 57 der Zusammentragvorrichtung 56 entnimmt und entlang einer Transportbahn 62 zu einer an einem anderen Ort befindlichen Applikationsvorrichtung transportiert. Ein Leitblech 63 sorgt dabei für eine Führung der in den Greifern 61 gehaltenen Stapel 10.

Zusammentragen und Weitertransport der zusammengetragenen Stapel 10 kann gemäss Fig. 15 aber auch mittels einer einzigen (umlaufenden) Transportvorrichtung 64 realisiert werden, die eine Vielzahl von schräg stehenden Plattformen 67 aufweist, an deren unteren Ende jeweils schwenkbare Greiferschenkel 68 angeordnet sind. In einem oberen Trum 65 der Transportvorrichtung 64 sind die Greiferschenkel 68 zurückgeschwenkt, so dass auf den Plattformen 67 die Stapel 10 ungehindert zusammengetragen werden können. Anschliessend werden die Greiferschenkel 68 in die geschlossene Stellung verschwenkt und halten dann klemmend die zusammengetragenen Stapel, die im unteren Trum 66 weitertransportiert werden können.

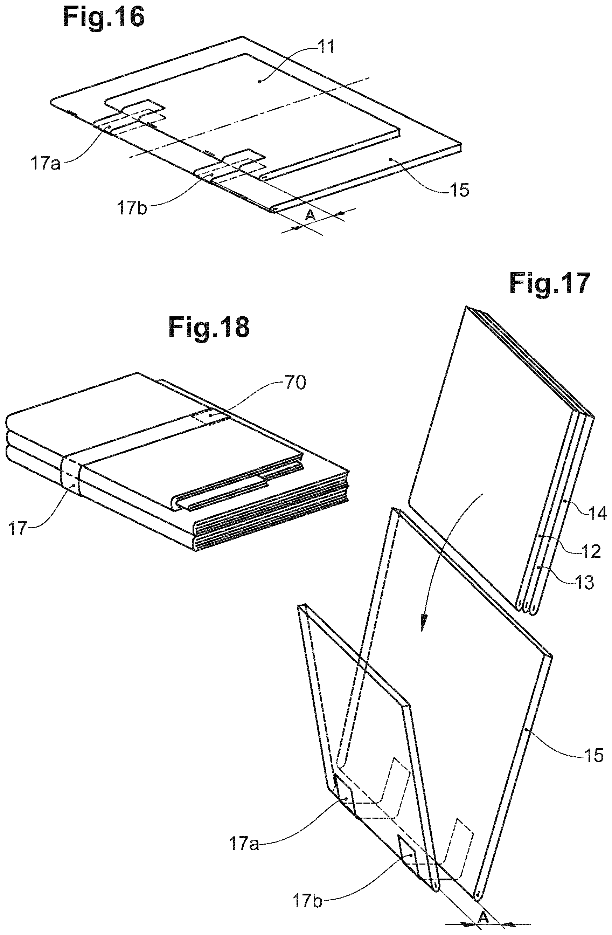

In den bisherigen Erläuterungen wurde davon ausgegangen, dass zunächst der vollständige Stapel beziehungsweise die vollständige Kollektion aus den Vorprodukten bereitgestellt wurde, um dann mit den Verbindungselementen beziehungsweise Klebestreifen versehen zu werden. Es ist aber auch eine andere nicht beanspruchte Vorgehensweise denkbar, die in den Fig. 16 und 17 veranschaulicht ist.

Bei dieser Vorgehensweise wird zunächst aus den später aussen liegenden Vorprodukten 11 und 15 eine Art Tasche gebildet, indem beide Vorprodukte 11, 15 mit den bevorzugten Kanten um den Abstand A versetzt übereinander angeordnet werden und dann mittels zweier Verbindungselemente beziehungsweise Klebestreifen 17a und 17b untereinander - wie in Fig. 16 dargestellt - miteinander verbunden werden. In Abhängigkeit der Schliessrichtung der derart vorbereiten Tasche umschliesst der Klebestreifen 17a und 17b die beiden aussen liegenden Vorprodukte 11 und 15 oder verbindet diese von deren Innenseite klebend, so dass die weiteren Vorprodukte entsprechend in die Tasche eingelegt werden können.

Gemäss Fig. 17 kann die so gebildete Tasche aufgeklappt werden, wobei die beiden Vorprodukte 11 und 15 zueinander einen Abstand A einnehmen. In die so geöffnete Tasche können dann die übrigen Vorprodukte 12-14 eingesteckt werden, um einen fertigen Stapel beziehungsweise eine fertige Kollektion zu bilden. Die übrigen Vorprodukte 12-14 liegen dann mit ihren bevorzugten Kanten an der Innenseite der Klebestreifen 17a und 17b an. Die übrigen Vorprodukte 12-14 können dabei einzeln nacheinander oder aber in einem gemeinsamen Paket eingesteckt werden.

Fig. 18 zeigt schliesslich einen Stapel gemäss einem Ausführungsbeispiel mit einem Klebestreifen 17, der das obere Vorprodukt des Stapels vollständig überlappt und mit einem eingeschlagenen Endabschnitt auf einer Innenseite des oberen Vorprodukts angeklebt ist. Diese Art der Klebung kann selbstverständlich auch auf der Unterseite des Stapels realisiert sein.

### Bezugszeichenliste

- 10,10',10",32: Stapel (von Vorprodukten)
- 11-15: Druckprodukt
- 16: Stapelkante
- 17,17',17": Klebestreifen
- 17a,b,19: Klebestreifen
- 18: Mittellinie
- 20: Klebeband
- 22: mittlerer Abschnitt (kleberfrei)
- 22a,b: Endabschnitt (kleberfrei)
- 23: Perforation
- 25: Einkerbung
- 26: Einschnitt
- 27: Stapelverbindungs-Vorrichtung
- 28: Transportvorrichtung
- 29: Trägerband
- 30: Haltevorrichtung
- 31: Klammer
- 33: Applikationsvorrichtung
- 34: Drehachse
- 35: Steuerkulisse
- 36: Streifenapplikator
- 37: Halterung
- 38: Winkelleiste
- 39: Aussparung
- 40: Zusammentragvorrichtung
- 41,41': Transportmittel
- 42: Sammelabschnitt/Abteil
- 43: Zuförderer
- 44: Vorratsschacht (Vorprodukte)
- 45: Kurvenbahn
- 46: Applikationsvorrichtung (Applikator)
- 47: Stapelausgabe
- 48: Trennschicht
- 49a,b: Klebestreifen
- 50: Verengung
- 51: Klebebandrolle
- 52: Transportvorrichtung
- 53: Schneidvorrichtung
- 54: Gegenrolle
- 55: Leitblech
- 56: Zusammentragvorrichtung
- 57: Abteil
- 58: Umlenkrolle
- 59: Umlaufbahn
- 60,64: Transportvorrichtung
- 61: Greifer
- 62: Transportbahn
- 63: Leitblech
- 65: oberer Trum
- 66: unterer Trum
- 67: Plattform
- 68: Greiferschenkel
- A: Abstand

## Patentansprüche

1. Verfahren zum Konfektionieren eines Stapels (10, 10', 10"; 32) aus lose aufeinanderliegenden bzw. einer Kollektion von lose aneinanderliegenden ein- oder mehrlagigen Vorprodukten (11-15; 11', 15'; 11", 15"), insbesondere Druckprodukten, gleicher oder unterschiedlicher Grösse, welcher Stapel (10, 10', 10"; 32) bzw. welche Kollektion zwei aussen liegende Vorprodukte (11, 15; 11', 15'; 11", 15") aufweist, bei welchem Verfahren dem Stapel (10, 10', 10") bzw. der Kollektion ein die spätere Handhabung erleichternder Zusammenhalt gegeben wird, wobei in einem ersten Schritt die zum Stapel bzw. zu der Kollektion gehörenden Vorprodukte (11-15; 11', 15'; 11", 15") bereitgestellt werden, und in einem zweiten Schritt wenigstens ein Verbindungselement (17; 17a, 17b; 17'; 17"; 19; 49a, 49b) derart angebracht wird, dass es die beiden aussen liegenden Vorprodukte (11, 15; 11', 15'; 11 ", 15") des Stapels (10, 10', 10"; 32) bzw. der Kollektion klebend überlappt, wobei die Vorprodukte (11-15; 11', 15'; 11", 15") des Stapels (10, 10', 10"; 32) bzw. der Kollektion jeweils wenigstens eine bevorzugte Kante aufweisen und die Vorprodukte (11-15; 11', 15'; 11", 15") des Stapels (10, 10', 10"; 32) bzw. der Kollektion im Stapel (10, 10', 10"; 32) bzw. in der Kollektion so angeordnet und ausgerichtet sind, dass die bevorzugten Kanten der Vorprodukte (11-15; 11', 15'; 11", 15") zusammen wenigstens eine Stapelkante (16) bilden, und dass diese Stapelkante (16) zur Anbringung des wenigstens einen Verbindungselements (17; 17a, 17b; 17'; 17"; 19; 49a, 49b) herangezogen wird, wobei als bevorzugte Kanten solche Kanten genommen werden, an denen die Vorprodukte gefalzt und/oder geheftet und/oder geklebt sind, wobei im ersten Schritt die zum Stapel bzw. zu der Kollektion gehörenden Vorprodukte (11-15; 11', 15'; 11", 15") in Form des Stapels (10, 10', 10") bzw. der Kollektion bereitgestellt werden und zur Bereitstellung des zu konfektionierenden Stapels (10, 10', 10"; 32) bzw. der zu konfektionierenden Kollektion die Vorprodukte (11-15; 11', 15'; 11", 15") in einer Zusammentragvorrichtung (40, 56) nacheinander in einer vorbestimmten Reihenfolge aufeinandergelegt bzw. aneinandergelegt werden, wobei die Stapel (10, 10', 10"; 32) bzw. Kollektionen am Ende der Zusammentragvorrichtung (40) in einer Applikationsvorrichtung (46) jeweils mit dem wenigstens einen Verbindungselement (17; 17a, 17b; 17'; 17"; 19; 49a, 49b) versehen werden, wobei in der Applikationsvorrichtung (46) ein Klebeband (20) von einer Klebebandrolle (51) abgerollt, von dem abgerollten Klebeband (20) ein Klebestreifen (17) abgeschnitten und der abgeschnittene Klebestreifen (17) an dem vorbeigeführten Stapel (10, 10') bzw. der vorbeigeführten Kollektion angebracht wird, wobei der Stapel (10, 10') bzw. die Kollektion mit der ausgewählten Stapelkante (16) voran durch die Applikationsvorrichtung (46) transportiert wird, **dadurch gekennzeichnet, dass** der abgeschnittene Klebestreifen (17) quer zur Transportrichtung des Stapels (10, 10') bzw. der Kollektion mit einer Klebeseite entgegen der Transportrichtung des Stapels (10, 10') bzw. der Kollektion orientiert derart bereitgehalten wird, dass der Stapel (10, 10') bzw. die Kollektion während seines bzw. ihres Transports durch die Applikationsvorrichtung (46) den bereitgehaltenen Klebestreifen (17) mit der ausgewählten Stapelkante in der Mitte trifft und mitnimmt.

2. Verfahren nach Anspruch 1, **dadurch gekennzeichnet, dass** das wenigstens eine Verbindungselement (17; 17a, 17b; 17'; 17"; 19; 49a, 49b) die beiden aussen liegenden Vorprodukte (11, 15; 11', 15'; 11", 15") des Stapels (10, 10', 10"; 32) bzw. der Kollektion jeweils auf der Aussenseite oder jeweils auf der Innenseite klebend überlappt.

3. Verfahren nach Anspruch 1 oder 2, **dadurch gekennzeichnet, dass** in der Zusammentragvorrichtung (40, 56) der sich bildende Stapel bzw. die sich bildende Kollektion an einer Mehrzahl von hintereinander angeordneten Zuförderern (43) vorbei geführt wird, wobei die Zuförderer (43) dem Stapel bzw. der Kollektion jeweils wenigstens ein Vorprodukt zuführen.

4. Verfahren nach einem der Ansprüche 1-3, **dadurch gekennzeichnet, dass** in der Applikationsvorrichtung (46) Führungselemente (55) vorgesehen sind, welche den vom Stapel (10, 10') bzw. der Kollektion aufgenommenen Klebestreifen (17) überlappend an die beiden aussen liegenden Vorprodukte (11, 15; 11', 15'; 11", 15") des Stapels (10, 10') bzw. der Kollektion andrücken.

5. Verfahren nach einem der Ansprüche 1-4, **dadurch gekennzeichnet, dass** mehrere Verbindungselemente (17a, 17b; 49a, 49b) längs der ausgewählten Stapelkante (16) am Stapel (10, 10', 10"; 32) bzw. an der Kollektion die beiden aussen liegenden Vorprodukte (11, 15; 11', 15'; 11", 15") des Stapels (10, 10', 10"; 32) bzw. der Kollektion oder an mehreren ausgewählten Stapelkanten am Stapel bzw. der Kollektion die beiden aussen liegenden Vorprodukte des Stapels bzw. der Kollektion überlappend angebracht werden.

6. Verfahren nach einem der Ansprüche 1-5, **dadurch gekennzeichnet, dass** der Klebestreifen (17; 17a, 17b; 17'; 17"; 19; 49a, 49b) vorzugsweise länglich ausgebildet ist und/oder vorzugsweise eine konstante Breite aufweist.

7. Verfahren nach einem der vorangehenden Ansprüche, **dadurch gekennzeichnet, dass** der Klebestreifen (17") in Längsrichtung gesehen in der Mitte eine Perforation (23) aufweist.

8. Verfahren nach einem der vorangehenden Ansprüche, **dadurch gekennzeichnet, dass** zum erleichterten Abtrennen des Klebestreifens vom Klebeband (20, 51) das Klebeband (20) an Trennstellen mit entsprechenden Einkerbungen (25) oder Einschnitten (26) versehen ist.

9. Verfahren nach einem der vorangehenden Ansprüche, **dadurch gekennzeichnet, dass** die Stapel (32) bzw. Kollektionen in einer Transportvorrichtung, in Klammern gehalten durch eine Stapelverbindungs-Vorrichtung transportiert werden, und dass sie in der Stapelverbindungs-Vorrichtung jeweils mit dem wenigstens einen Verbindungselement (17) versehen werden.

## Claims

1. A method for assembling a stack (10, 10', 10"; 32) of single- or multi-layered pre-products (11-15; 11', 15'; 11", 15that lie freely one on top of the other or a collection of single- or multi-layered pre-products (11-15; 11', 15'; 11", 15") that lie freely side by side, in particular printed products, of equal or different sizes, which stack (10, 10', 10"; 32) or collection has two pre-products (11, 15; 11', 15'; 11", 15") lying on the outside, during which method the stack (10, 10', 10") or collection is given a cohesion that facilitates later handling; the pre-products (11-15; 11', 15'; 11", 15") which belong to the stack or to the collection being provided in a first step, and at least one connection element (17; 17a, 17b; 17'; 17"; 19; 49a, 49b) is mounted in a second step, in such a manner that said element overlaps the two outside pre-products (11, 15; 11', 15'; 11", 15") of the stack (10, 10', 10"; 32) or the collection in an adhesive manner; the pre-products (11-15; 11', 15'; 11", 15") of the stack (10, 10', 10"; 32) or of the collection each have at least one preferred edge, and the pre-products (11-15; 11', 15'; 11", 15") of the stack (10, 10', 10"; 32) or of the collection being arranged and aligned in the stack (10, 10', 10"; 32) or in the collection in such a manner that the preferred edges of the pre-products (11-15; 11', 15'; 11", 15") together form at least one stack edge (16) and that this stack edge (16) is used for mounting the at least one connection element (17; 17a, 17b; 17'; 17"; 19; 49a, 49b); the preferred edges being the edges at which the pre-products are folded and/or affixed and/or adhesively bonded; in the first step, the pre-products (11-15; 11', 15'; 11", 15") which belong to the stack or collection being provided in the form of the stack (10, 10', 10") or of the collection and, for provision of the stack (10, 10', 10"; 32) or of the collection to be assembled, the pre-products (11-15; 11', 15'; 11", 15") being laid one on top of the other or side by side successively in a predefined order in a collating device (40, 56); the stacks (10, 10', 10"; 32) or the collections each being provided with the at least one connection element (17; 17a, 17b; 17'; 17"; 19; 49a, 49b) in an application device (46) at the end of the collating device (40); in the application device (46), an adhesive tape (20) unrolling from an adhesive tape roll (51), an adhesive strip (17) being cut off from the unrolled adhesive tape (20), and the cut-off adhesive strip (17) being attached to the stack (10, 10') or to the collection which is guided past; the stack (10, 10') or the collection being conveyed through the application device (46) with the selected stack edge (16) in front, **characterised in that** the cut-off adhesive strip (17) is held in readiness transversely to the conveying direction of the stack (10, 10') or of the collection with an adhesive side oriented counter to the conveying direction of the stack (10, 10') or of the collection in such a manner that the stack (10, 10') or the collection meets the held adhesive strip (17) with the selected stack edge in the centre and entrains it while the stack or the collection is conveyed through the application device (46).

2. The method according to Claim 1, **characterised in that** the at least one connection element (17; 17a, 17b; 17'; 17"; 19; 49a, 49b) adhesively overlaps the two outside pre-products (11, 15; 11', 15'; 11", 15") of the stack (10, 10', 10"; 32) or of the collection in each case on the outer side or in each case on the inside.

3. The method according to Claim 1 or 2, **characterised in that** in the collating device (40, 56), the forming stack or collection is guided past a plurality of feeders (43) arranged one behind the other, wherein the feeders (43) each feed at least one pre-product to the stack or to the collection.

4. The method according to any one of Claims 1-3, **characterised in that** in the application device (46), guide elements (55) are provided, which press the adhesive strip (17) picked up by the stack (10, 10') or collection in an overlapping manner against the two outside pre-products (11, 15; 11', 15'; 11", 15") of the stack (10, 10') or collection.

5. The method according to any one of Claims 1-4, **characterised in that** multiple connection elements (17a, 17b; 49a, 49b) are applied along the selected stack edge (16) on the stack (10, 10', 10"; 32) or of the collection, overlapping the two outside pre-products (11, 15; 11', 15'; 11", 15") of the stack (10, 10', 10"; 32) or of the collection, or are applied at multiple selected stack edges on the stack or collection, overlapping the two outside pre-products of the stack or of the collection.

6. The method according to any one of Claims 1-5, **characterised in that** the adhesive strip (17; 17a, 17b; 17'; 17"; 19; 49a, 49b) is realised in an elongated manner and/or preferably has a constant width.

7. The method according to any one of the preceding claims, **characterised in that** the adhesive strip (17") has a perforation (23) in the centre when viewed in the longitudinal direction.

8. The method according to any one of the preceding claims, **characterised in that** the adhesive tape (20) is provided with corresponding notches (25) or cut-outs (26) at separation points for easier detachment of the adhesive strip from the adhesive tape (20, 51).

9. The method according to any one of the preceding claims, **characterised in that** the stacks (32) or the collections are conveyed in a conveying device, held in clamps, through a stack-connecting device and are each provided with the at least one connection element (17) in the stack-connecting device.

## Revendications

1. Procédé destiné à confectionner une pile (10, 10', 10" ; 32) de produits intermédiaires (11 à 15 ; 11', 15' ; 11", 15") monocouche ou multicouches superposés en vrac ou une collection adjacente en vrac de tels produits, notamment de produits d'imprimerie de dimensions identiques ou différentes, laquelle pile (10, 10', 10" ; 32) ou laquelle collection comportant deux produits intermédiaires (11, 15 ; 11', 15' ; 11", 15") situés à l'extérieur, lors duquel procédé on confère à la pile (10, 10', 10") ou à collection une cohésion facilitant sa manipulation ultérieure, sachant que dans une première étape, on met à disposition les produits intermédiaires (11 à 15 ; 11', 15' ; 11", 15") faisant partie de la pile ou de la collection et dans une deuxième étape, on appose au moins un élément d'assemblage (17 ; 17a, 17b ; 17' ; 17" ; 19 ; 49a, 49b) de sorte qu'il chevauche en adhérant les deux produits intermédiaires (11, 15 ; 11', 15' ; 11", 15") situés à l'extérieur de la pile (10, 10', 10" ; 32) ou de la collection, les produits intermédiaires (11 à 15 ; 11', 15' ; 11", 15") de la pile (10, 10', 10" ; 32) ou de la collection comportant chacun au moins une arête préférentielle et les produits intermédiaires (11 à 15 ; 11', 15' ; 11", 15") de la pile (10, 10', 10" ; 32) ou de la collection dans la pile (10, 10', 10" ; 32) ou dans la collection étant placés et orientés de telle sorte que les arêtes préférentielles des produits intermédiaires (11 à 15 ; 11', 15' ; 11", 15") forment ensemble au moins une arête de pile (16) et que ladite arête de pile (16) soit utilisée pour poser l'au moins un élément d'assemblage (17 ; 17a, 17b ; 17' ; 17" ; 19 ; 49a, 49b), sachant que sont prises comme arêtes préférentielles les arêtes sur lesquelles les produits intermédiaires sont pliés et/ou agrafés et/ou collés, sachant que dans la première étape, on met à disposition les produits intermédiaires (11 à 15 ; 11', 15' ; 11", 15") faisant partie de la pile ou de la collection sous la forme de la pile (10, 10', 10") ou de la collection et pour la mise à disposition de la pile (10, 10', 10" ; 32) à confectionner ou de la collection à confectionner, on superpose ou on aligne successivement selon un ordre prédéfini les produits intermédiaires (11 à 15 ; 11', 15' ; 11", 15") dans un dispositif de compilation (40, 56), à la fin du dispositif de compilation (40), les piles (10, 10', 10" ; 32) ou les collections étant munies dans un dispositif d'application (46) de l'au moins un élément d'assemblage (17 ; 17a, 17b ; 17' ; 17" ; 19 ; 49a, 49b), sachant que dans le dispositif d'application (46), une bande adhésive (20) se déroule d'un rouleau de bande adhésive (51), de la bande adhésive (20) déroulée est coupé un ruban adhésif (17) et le ruban adhésif (17) coupé est apposé sur la pile (10, 10') passant devant lui ou sur la collection passant devant lui, la pile (10, 10') ou collection étant transportée avec l'arête de pile (16) sélectionnée placée à l'avant à travers le dispositif d'application (46), **caractérisé en ce que** le ruban adhésif (17) est tenu à disposition en étant orienté à la transversale de la direction de transport de la pile (10, 10') ou de la collection, avec une face adhésive à l'encontre de la direction de transport de la pile (10, 10') ou de la collection, de telle sorte que pendant son transport à travers le dispositif d'application (46), la pile (10, 10') ou la collection touche au centre par l'arête de pile le ruban adhésif (17) tenu à disposition et l'entraîne.

2. Procédé selon la revendication 1, **caractérisé en ce que** l'au moins un élément d'assemblage (17 ; 17a, 17b ; 17' ; 17" ; 19 ; 49a, 49b) chevauche en adhérant les deux produits intermédiaires (11, 15 ; 11', 15' ; 11", 15") situés à l'extérieur de la pile (10, 10', 10" ; 32) ou de la collection chaque fois sur la face extérieure ou chaque fois sur la face intérieure.

3. Procédé selon la revendication 1 ou 2, **caractérisé en ce que** dans le dispositif de compilation (40, 56), la pile en formation ou la collection en formation est amenée à l'avant d'une pluralité de convoyeurs d'amenage (43) placés les uns derrière les autres, les convoyeurs d'amenage (43) amenant à la pile ou à la collection chaque fois au moins un produit intermédiaire.

4. Procédé selon l'une quelconque des revendications 1 à 3, **caractérisé en ce que** dans le dispositif d'application (46) sont prévus des éléments de guidage (55), qui en chevauchant le ruban adhésif (17) repris par la pile (10, 10') ou par la collection s'appuient sur les deux produits intermédiaires (11, 15 ; 11', 15' ; 11", 15") situés à l'extérieur de la pile (10, 10') ou de la collection.

5. Procédé selon l'une quelconque des revendications 1 à 4, **caractérisé en ce qu'**on appose plusieurs éléments d'assemblage (17a, 17b ; 49a, 49b) le long de l'arête de pile (16) sélectionnée sur la pile (10, 10', 10" ; 32) ou sur la collection, en chevauchant les deux produits intermédiaires (11, 15 ; 11', 15' ; 11", 15") situés à l'extérieur de la pile (10, 10', 10" ; 32) ou de la collection ou sur plusieurs arêtes de pile sélectionnées sur la pile ou sur la collection, en chevauchant les deux produits intermédiaires situés à l'extérieur de la pile ou de la collection.

6. Procédé selon l'une quelconque des revendications 1 à 5, **caractérisé en ce que** le ruban adhésif (17 ; 17a, 17b ; 17' ; 17" ; 19 ; 49a, 49b) est conçu de préférence de forme allongée et/ou comporte de préférence une largeur constante.

7. Procédé selon l'une quelconque des revendications précédentes, **caractérisé en ce que**, vu en direction longitudinale, le ruban adhésif (17") comporte au centre une perforation (23).

8. Procédé selon l'une quelconque des revendications précédentes, caractérisé en ce pour faciliter le sectionnement du ruban adhésif de la bande adhésive (20, 51), la bande adhésive (20) est dotée sur des points de sectionnement de rainures (25) ou d'incisions (26) correspondantes.

9. Procédé selon l'une quelconque des revendications précédentes, **caractérisé en ce qu'**on transporte les piles (32) ou les collections dans un dispositif de transport, maintenus par des crampons à travers un dispositif d'assemblage de piles et **en ce qu'**on les munit de l'au moins un élément d'assemblage (17) dans le dispositif d'assemblage de piles.
